# EUROPEAN PATENT SPECIFICATION

(11) **EP 4 389 333 B1**
(45) Date of publication and mention of the grant of the patent: **29.04.2026**
(21) Application number: 23219092.6
(22) Date of filing: 21.12.2023
(51) Int. Cl.: B23F 21/16, B23F 21/00, B23F 23/12, B23F 17/00

(54) **GEAR CUTTING MACHINE**
VERZAHNUNGSMASCHINE
MACHINE DE COUPE D'ENGRENAGES

(30) Priority: 22.12.2022 IT 202200026418
(43) Date of publication of application: 26.06.2024
(73) Proprietor: M Services S.r.l., 36075 Montecchio Maggiore (VI) (IT)
(72) Inventor: PEZZO, Giorgio, 36075 Montecchio Maggiore (VI) (IT)
(74) Representative: Marchioro, Paolo

(56) References cited:
- WO-A1-2006/010708
- WO-A1-2006/010709
- CN-A- 106 583 855
- CN-A- 114 850 584
- US-A1- 2006 174 464
- US-A1- 2019 314 910
- US-B2- 10 994 352

## Description

The invention concerns a gear cutting machine.

Gear cutting machines for making gear wheels are currently known.

Document US 10 994 352 B2 discloses such a known machine according to the preamble of attached independent claim 1.

Such a gear cutting machine of the known type comprises:
- first supporting means positioned opposite each other and extending along a first axis;
- a first shaft whose ends are constrained to said first supporting means along said first axis; more specifically, said first shaft is configured to support a workpiece along said first axis;
- first rotation means configured to rotate said first supporting means around said first axis;
- second supporting means positioned opposite each other and extending along a second axis, wherein said second axis is orthogonal to the above-mentioned first axis;
- a second shaft whose ends are constrained to said second supporting means along said second axis;
- a hob tool operatively connected to said second shaft along said second axis;
- second rotation means configured to rotate said second supporting means around said second axis;
- third rotation means configured to rotate said second supporting means around a third axis, wherein said third axis is orthogonal to the above-mentioned first axis;
- first translation means configured to translate said second supporting means along a fourth axis, wherein said fourth axis is parallel to the above-mentioned third axis;
- second translation means configured to translate said second supporting means along a fifth axis, wherein said fifth axis is parallel to the above-mentioned second axis;
- third translation means configured to translate said second supporting means along a sixth axis, wherein said sixth axis is parallel to the above-mentioned first axis.

Such a gear cutting machine, although well-known and appreciated, has some important limitations.

In particular, such a gear cutting machine of the known type only allows the creation of the envelope of the tooth spaces on a workpiece.

Therefore, to disadvantage, any additional machining of the workpiece requires the use of a different machine tool.

In addition, in order to move the workpiece to a different machine tool it is necessary to precisely align said workpiece by means of a timing procedure.

Therefore, to disadvantage, said timing procedure requires precise and expensive centering instruments.

The task of the present invention is to develop a gear cutting machine that is capable of overcoming the above-mentioned drawbacks and limitations of the known technique.

In particular, it is the object of the present invention to provide a gear cutting machine that makes it possible to carry out machining operations other than the mere creation of the envelope of the tooth spaces on a workpiece.

It is also an object of the present invention to provide a gear cutting machine that does not require a timing procedure between the different machining operations carried out on the above-mentioned workpiece.

The task and the objects mentioned above are fulfilled by a gear cutting machine according to claim 1.

Further characteristics of the gear cutting machine according to claim 1 are described in the dependent claims.

The task and the above-mentioned objects, together with the advantages that will be mentioned below, are highlighted in the description of an embodiment of the invention, which is provided by way of non-limiting example, with reference to the attached drawings, wherein:
- Figure 1 shows a perspective view of a gear cutting machine according to the invention;
- Figure 2a shows an exploded perspective view of Figure 1;
- Figure 2b shows an exploded perspective view of a gear cutting machine according to the invention;
- Figure 2c shows a further exploded perspective view of a gear cutting machine according to the invention;
- Figure 3a shows a perspective view of a detail of Figure 2a;
- Figure 3b shows a top sectional view of Figure 3a;
- Figure 3c shows a perspective sectional view of Figure 3a;
- Figure 4a shows a perspective view of a detail of a gear cutting machine according to the invention;
- Figure 4b shows a top sectional view of Figure 4a;
- Figure 4c shows a perspective sectional view of Figure 4a;
- Figure 5a shows a perspective view of a detail of a gear cutting machine according to the invention;
- Figure 5b shows a perspective sectional view of Figure 5a;
- Figure 6a shows a perspective view of a detail of Figure 2b;
- Figure 6b shows a perspective sectional view of Figure 6a;
- Figure 7a shows a perspective view of a detail of Figure 2c;
- Figure 7b shows a perspective sectional view of Figure 7a;
- Figure 8a shows a perspective view of a detail of a gear cutting machine according to the invention;
- Figure 8b shows a perspective sectional view of Figure 8a.

With reference to the above-mentioned figures, a gear cutting machine according to the invention is indicated as a whole by the number **10.**

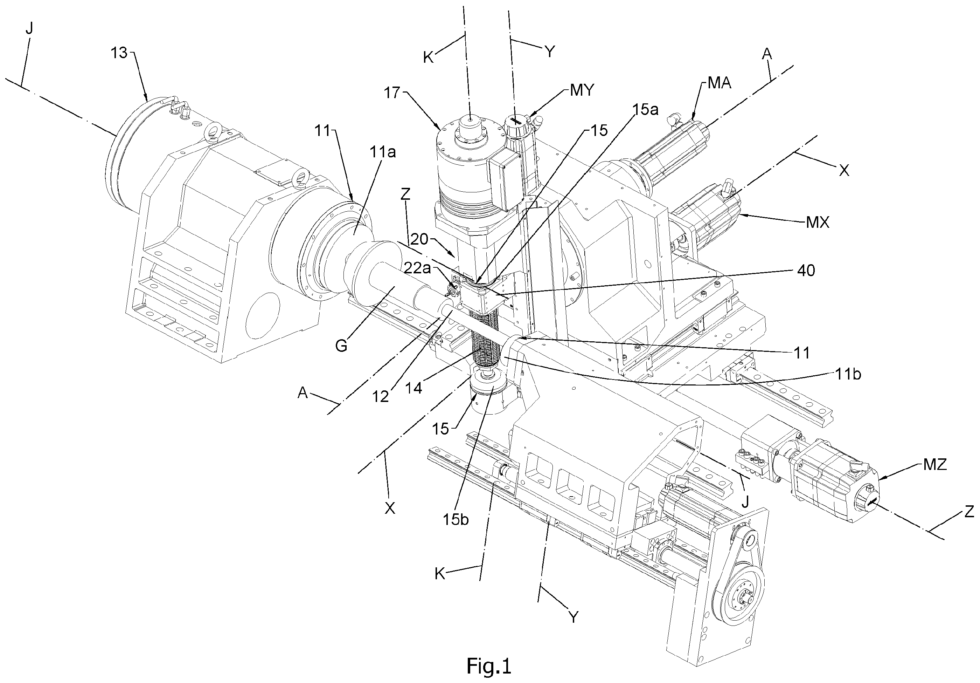

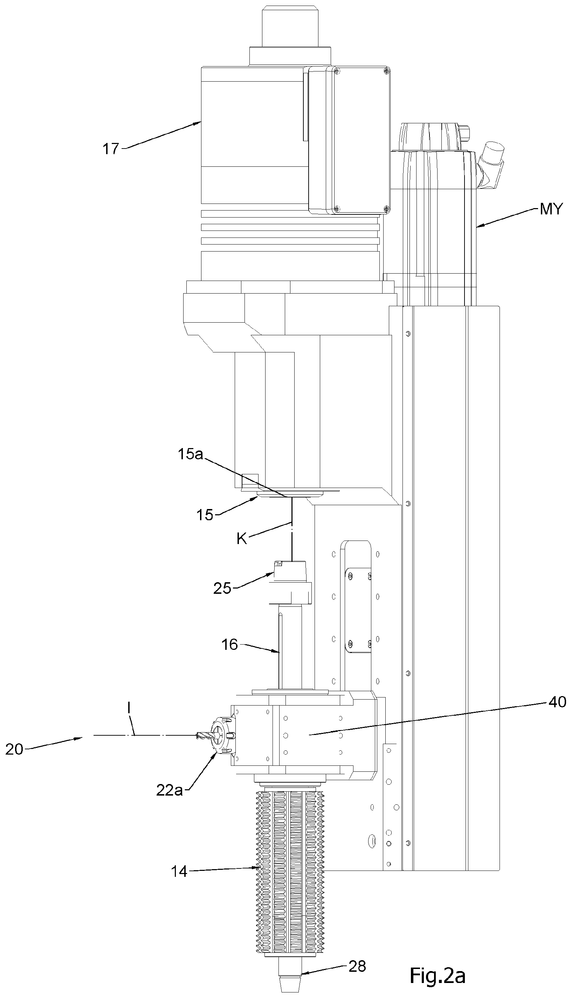

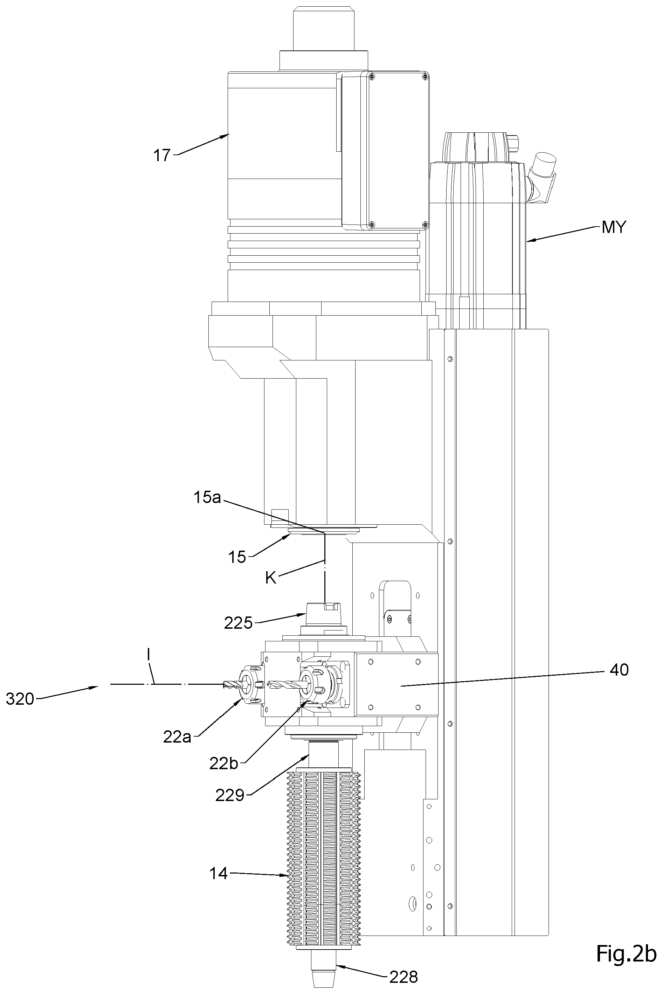

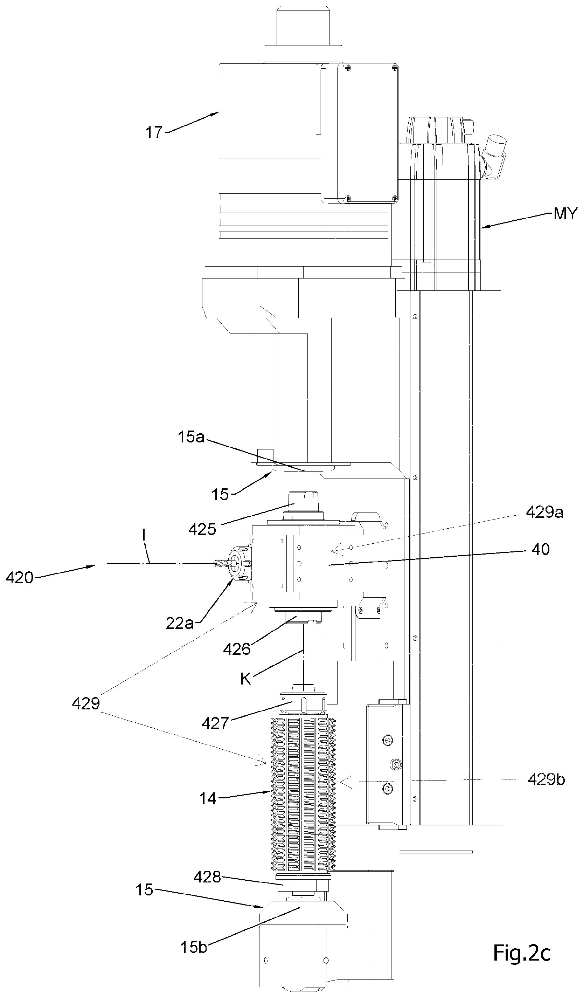

Said gear cutting machine **10** comprises:
- first supporting means **11** positioned opposite each other and clearly visible in Figure 1; said first supporting means **11** extend along a first axis **J;** in particular, said supporting means **11** comprise a first spindle **11a** and a first tailstock **11b;**
- a first shaft **12,** clearly visible in Figure 1, whose ends are constrained to said first supporting means **11** along said first axis **J;** said first shaft **12** is configured to support a workpiece **G** along said first axis **J;**
- first rotation means **13,** clearly visible in Figure 1, configured to rotate said first supporting means **11** around said first axis **J;** more precisely, said rotation means **13** comprise a first electric drive configured to rotate said first spindle **11a** around said first axis **J;**
- second supporting means **15** positioned opposite each other and clearly visible in Figures 1, 2a, 2b and 2c; said second supporting means **15** extend along a second axis **K;** in the embodiment described herein, said second supporting means **15** comprise a first female coupling **15a** and a second tailstock **15b;** furthermore, said second axis **K** is orthogonal to the above-mentioned first axis **J;**
- a hob tool **14,** clearly visible in Figures 1, 2a, 2b and 2c, operatively connected to said second supporting means **15** along said second axis **K;**
- second rotation means **17,** clearly visible in Figures 1, 2a, 2b and 2c, configured to rotate said second supporting means **15** around said second axis **K;** in particular, said second rotation means **17** comprise a second electric drive configured to rotate said first female coupling **15a** around said second axis **K;**
- third rotation means **MA,** clearly visible in Figure 1, configured to rotate said second supporting means **15** around a third axis **A;** more precisely, said third rotation means **MA** are suited to incline said second supporting means **15** with respect to the above-mentioned workpiece **G,** thus allowing the creation of helical gear wheels; moreover, said third axis **A** is orthogonal to the above-mentioned first axis **J;**
- first translation means **MX,** clearly visible in Figure 1, configured to translate said second supporting means **15** along a fourth axis **X;** said fourth axis **X** is parallel to the above-mentioned third axis **A;**
- second translation means **MY,** clearly visible in Figure 1, configured to translate said second supporting means **15** along a fifth axis **Y;** said fifth axis **Y** is parallel to the above-mentioned second axis **K;**
- third translation means **MZ,** clearly visible in Figure 1, configured to translate said second supporting means **15** along a sixth axis **Z;** said sixth axis **Z** is parallel to the above-mentioned first axis **J.**

In a first example of embodiment of the invention, said gear cutting machine **10** comprises a tool carrier module **20,** clearly visible in Figures 1, 2a, 3a, 3b and 3c, which is operatively connected to said second supporting means **15** along said second axis **K.**

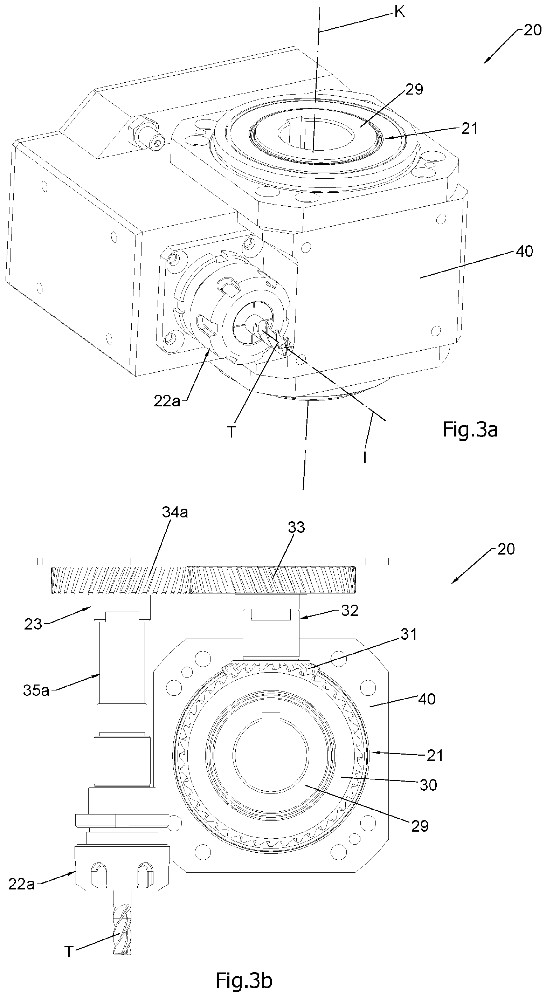

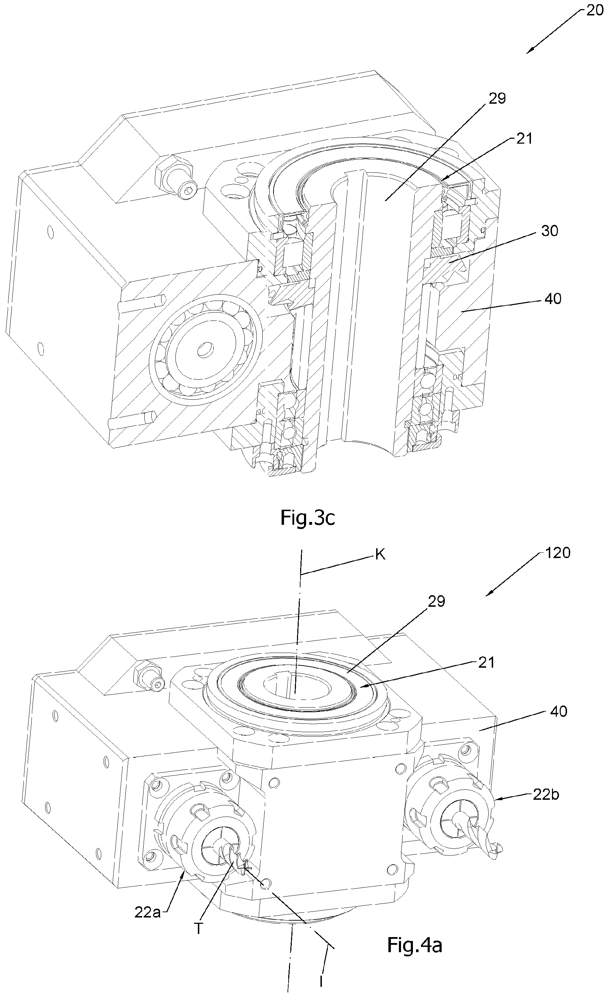

Said tool carrier module **20** comprises a rotary assembly **21,** visible in Figures 3a, 3b, 3c, configured to receive a mechanical power **P** as an input from said second rotation means **17.**

Said tool carrier module **20** also comprises an output **22a** configured to support a tool **T,** as can be understood from Figures 1, 2a, 3a and 3b.

Said tool carrier module **20** comprises transmission means **23,** visible in Figure 3b, configured to transmit said mechanical power P from said rotary assembly **21** to said output **22a.**

In addition, said at least one tool carrier module **20** comprises a containment body **40** externally fixed to the above-mentioned second translation means **MY.**

In particular, said containment body **40** is configured to support the rotary assembly **21,** said at least one output **22a** and the transmission means **23.**

With reference to said first example of embodiment of the invention, the gear cutting machine **10** comprises a second shaft **16,** clearly visible in Figure 2a, whose ends are constrained to said second supporting means **15** along said second axis **K.**

More precisely, said second shaft **16** comprises at a first end a first male coupling **25,** also visible in Figure 2a, wherein said first male coupling **25** is configured to be connected to the above-mentioned first female coupling **15a.**

Moreover, said second shaft **16** comprises at a second end a second headstock **28** configured to be connected to said second tailstock **15b.**

Said hob tool **14** and said tool carrier module **20** are operatively connected to said second supporting means **15** through said second shaft **16,** as can be clearly understood from Figure 2a.

Said rotary assembly **21** comprises a hollow shaft **29,** clearly visible in Figures 3a, 3b and 3c, with said second shaft **16** passing therethrough along said second axis **K.**

Furthermore, said rotary assembly **21** comprises a gear wheel **30** externally fixed to said hollow shaft **29,** said gear wheel **30** being shown in Figures 3b and 3c.

More precisely, said gear wheel **30** is operatively connected to the above-mentioned transmission means **23,** as clearly shown in Figure 3b.

Said transmission means **23** comprise a plurality of gears **31, 33** and **34** and a plurality of countershafts **32** and **35a,** also clearly visible in Figure 3b.

In particular, said transmission means **23** are configured as a gearbox of the known type.

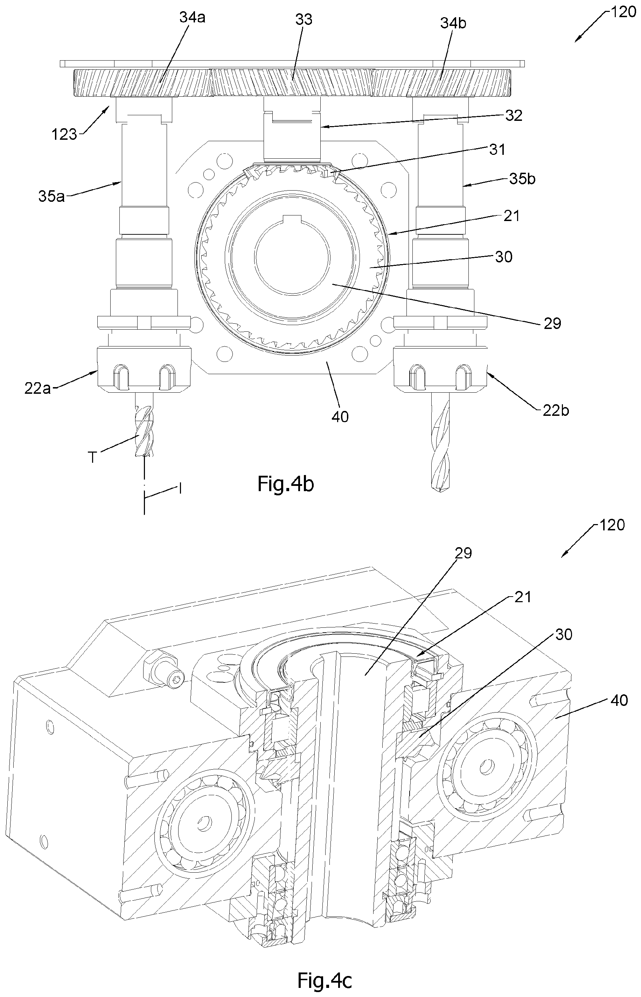

In a variant of said first example of embodiment, the gear cutting machine **10** comprises a tool carrier module **120,** clearly visible in Figures 4a, 4b and 4c.

Said tool carrier module **120** differs from the tool carrier module **20** in that it comprises a plurality of outputs **22a** and **22b.**

Furthermore, said tool carrier module **120** comprises transmission means **123,** visible in Figure 4b, configured to transmit said mechanical power **P** from said rotary assembly **121** to said plurality of outputs **22a** and **22b.**

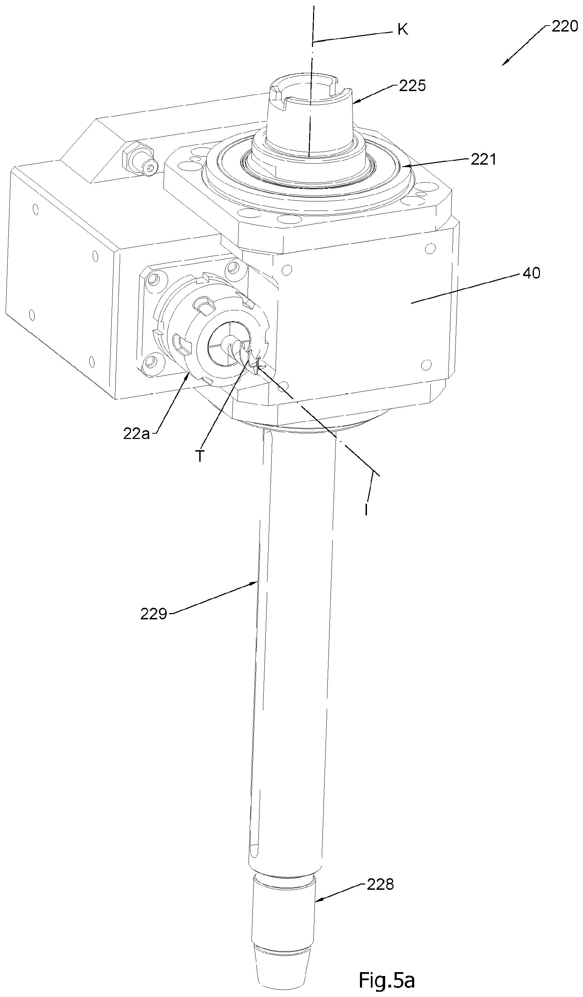

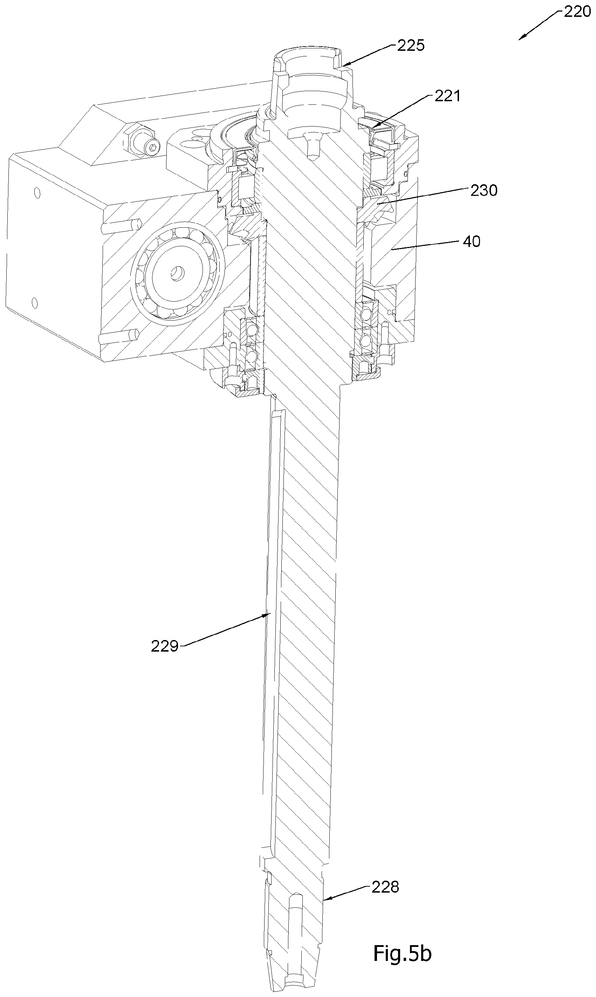

In a second example of embodiment of the invention, said gear cutting machine **10** comprises a tool carrier module **220,** clearly visible in Figures 5a and 5b, operatively connected to said second supporting means **15** along said second axis **K.**

Said tool carrier module **220** comprises a rotary assembly **221,** visible in Figures 5a and 5b, configured to receive a mechanical power **P** as an input from said second rotation means **17.**

Said tool carrier module **220** also comprises an output **22a** configured to support a tool **T,** as can also be understood from Figures 5a and 5b.

Said tool carrier module **220** comprises transmission means **23** similar to those present in the first example of embodiment described above.

In addition, said at least one tool carrier module **220** comprises a containment body **40** externally fixed to the above-mentioned second translation means **MY.**

In particular, said containment body **40** is configured to support the rotary assembly **221,** said at least one output **22a** and the transmission means **23.**

With reference to said second example of embodiment of the invention, the gear cutting machine **10** comprises a second shaft **229** whose ends are constrained to said second supporting means **15** along said second axis **K.** In particular, said rotary assembly **221** comprises said second shaft **229,** as clearly visible in Figures 5a and 5b.

More precisely, said second shaft **229** comprises at a first end a first male coupling **225,** also visible in Figures 5a and 5b, wherein said first male coupling **225** is configured to be connected to the above-mentioned first female coupling **15a.**

Furthermore, said second shaft **229** comprises at a second end a second headstock **228** configured to be connected to said second tailstock **15b.**

Said hob tool **14** and said tool carrier module **220** are operatively connected to said second supporting means **15** through said second shaft **229.**

Furthermore, said rotary assembly **221** comprises a gear wheel 230 externally fixed to said second shaft **229,** said gear wheel 230 being shown in Figure 5b.

More precisely, said gear wheel 230 is operatively connected to the above-mentioned transmission means **23.**

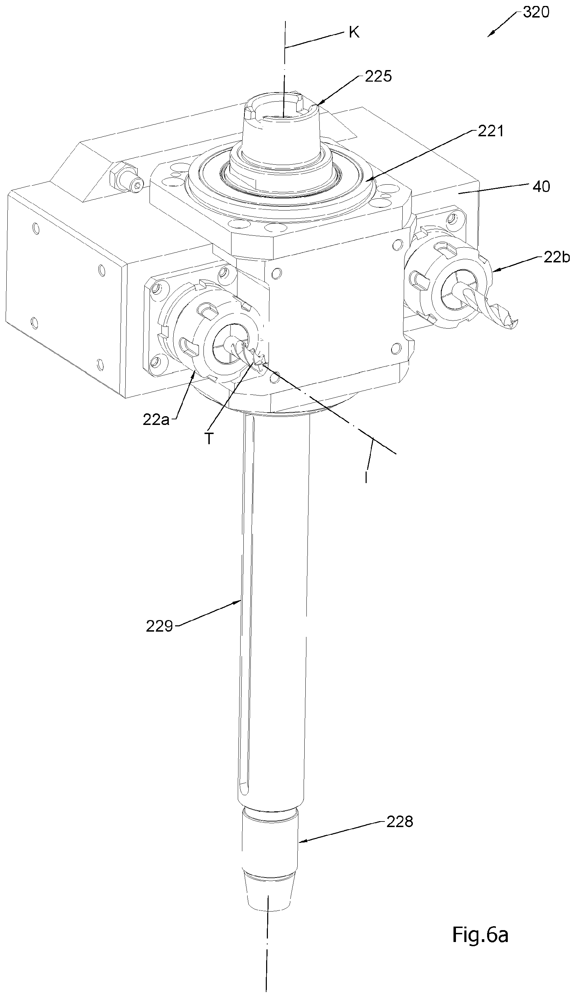

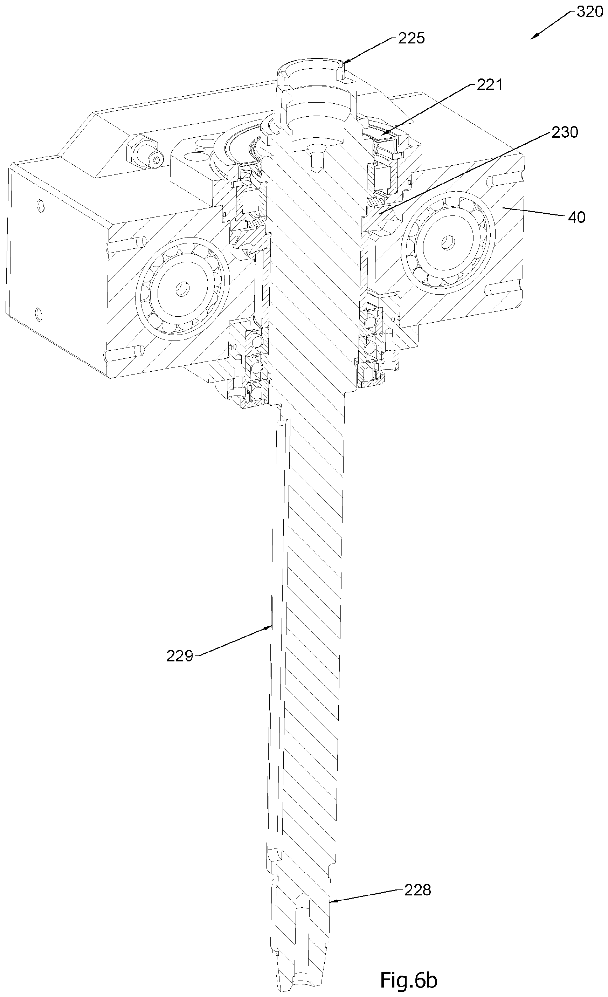

In a variant of said second example of embodiment, the gear cutting machine **10** comprises a tool carrier module **320,** clearly visible in Figures 2b, 6a and 6b.

Said tool carrier module **320** differs from the tool carrier module **220** in that it comprises a plurality of outputs **22a** and **22b.**

In addition, said tool carrier module **320** comprises transmission means **123** similar to those present in the first example of embodiment described above.

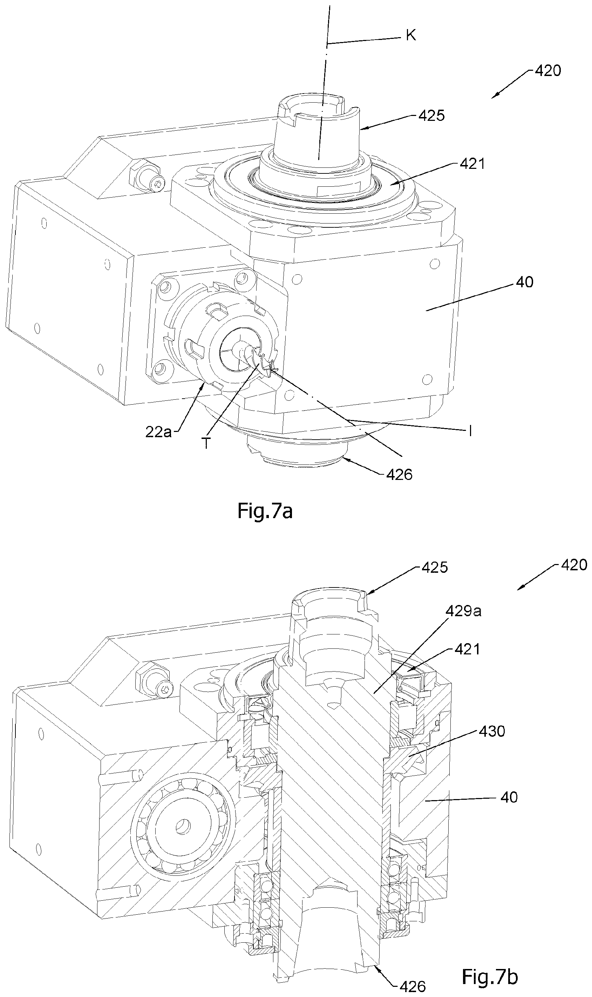

In a third example of embodiment of the invention, said gear cutting machine **10** comprises a tool carrier module **420,** clearly visible in Figures 2c, 7a and 7b, operatively connected to said second supporting means **15** along said second axis **K.**

Said tool carrier module **420** comprises a rotary assembly **421,** visible in Figures 7a and 7b, configured to receive a mechanical power **P** as an input from said second rotation means **17.**

Said tool carrier module **420** also comprises an output **22a** configured to support a tool **T,** as can also be understood from Figures 2c, 7a and 7b.

Said tool carrier module **420** comprises transmission means **23** similar to those present in the first and in the second example of embodiment described above. In addition, said at least one tool carrier module **420** comprises a containment body **40** externally fixed to the above-mentioned second translation means **MY.**

In particular, said containment body **40** is configured to support the rotary assembly **421,** said at least one output **22a** and the transmission means **23.** With reference to said third example of embodiment of the invention, the gear cutting machine **10** comprises a second shaft **429** whose ends are constrained to said second supporting means **15** along said second axis **K.**

The hob tool **14** and the above mentioned at least one tool carrier module **420** are operatively connected to the second supporting means **15** through said second shaft **429.**

In particular, said second shaft **429** comprises a first portion **429a** and a second portion **429b.**

Said rotary assembly **421** comprises the above mentioned first portion **429a** of said second shaft **429,** as can be seen in Figure 7b.

The second portion **429b** of said second shaft **429** is inserted in the hob tool **14.**

Figure 2c shows an exploded perspective view of said third example of embodiment, in particular the first portion **429a** and the second portion **429b** of the second shaft **429** are inserted in the rotary assembly **421** and in the hob tool **14,** respectively.

The first portion **429a** of the second shaft **429** comprises at its ends a first coupling **425** and a second coupling **426.** In particular, in the preferred embodiment, said first coupling **425** is a male coupling. Moreover, said second coupling **426** is also a male coupling.

In addition, the second portion **429b** of the second shaft **429** comprises at its ends a third coupling **427** and a fourth coupling **428.** In particular, in the preferred embodiment, said third coupling **427** is a female coupling. Furthermore, said fourth coupling **428** is a headstock.

In particular, said hob tool **14** and said tool carrier module **420** are operatively connected to said second supporting means **15** through said first coupling **425** and said fourth coupling **428,** similarly to the first and the second example of embodiment described above, in fact, said first coupling **425** is a male coupling and said fourth coupling **428** is a headstock.

Even more specifically, said second coupling **426** of the tool carrier module **420** and said third coupling **427** of the hob tool **14** are configured to be connected to each other in order to transmit said mechanical power **P.** In particular, said second coupling **426** is a male coupling configured to be connected to the third female coupling **427.**

Furthermore, said rotary assembly **421** comprises a gear wheel 430 externally fixed to said second shaft **429,** said gear wheel 430 being shown in Figure 7b.

More precisely, said gear wheel 430 is operatively connected to the above-mentioned transmission means **23.**

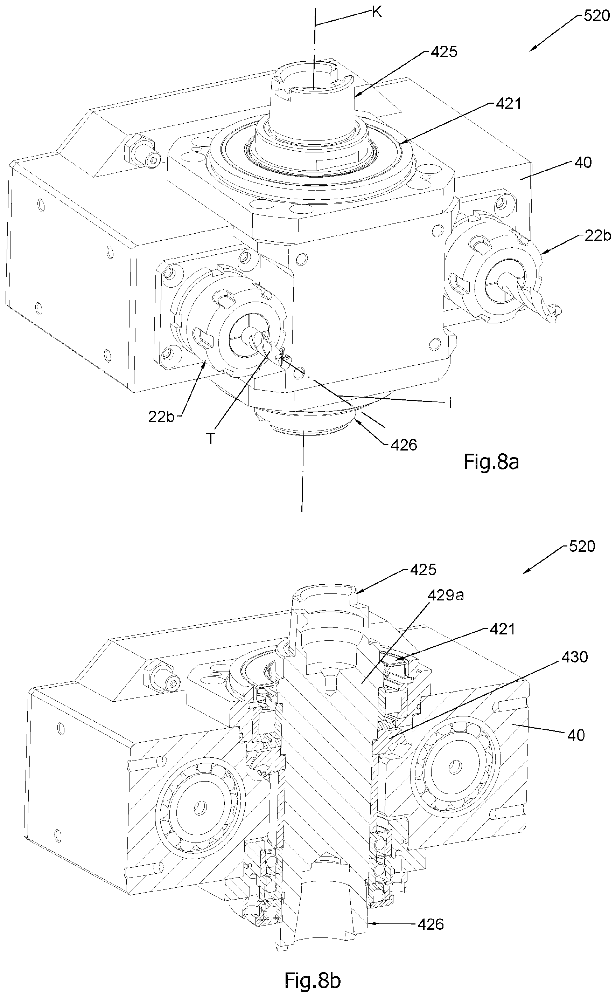

In a variant of said third example of embodiment, the gear cutting machine **10** comprises a tool carrier module **520,** clearly visible in Figures 8a and 8b.

Said tool carrier module **520** differs from the tool carrier module **420** in that it comprises a plurality of outputs **22a** and **22b.**

Furthermore, said tool carrier module **520** comprises transmission means **123** similar to those present in the first and in the second example of embodiment described above.

It is important to underline that the tool carrier modules **20, 120, 220, 320, 420** and **520** just described above advantageously allow the gear cutting machine **10** to perform machining operations other than the mere creation of the envelope of the tooth spaces on the above-mentioned workpiece **G.**

For example, in the embodiments of the invention illustrated herein, said tool **T** is a helical drill bit.

Therefore, the tool carrier modules **20, 120, 220, 320, 420** and **520** configured as described above are suitable for drilling holes in the workpiece **G.**

However, the use of a tool **T** other than a helical drill bit for performing a different machining operation is not excluded.

It should also be noted that, in all of the examples of embodiment of the invention discussed herein, the gear cutting machine **10** may comprise a plurality of the above-mentioned tool carrier modules **20, 120, 220, 320, 420** and **520.**

Furthermore, in all of the examples of embodiment illustrated herein, each output of the above-mentioned plurality of outputs **22a** and **22b** is configured to rotate around an output axis **I.**

Said output axis I is different from said second axis **K.**

More precisely, said output axis I is skew with respect to the above-mentioned second axis **K.**

It is not excluded, however, that said output axis I may coincide with said second axis **K,** or that said output axis I may be different and coplanar with respect to said second axis **K.**

In practice, it has been shown that the invention fulfils its task and achieves the set objects.

In particular, with the invention, a gear cutting machine has been developed that allows machining operations other than the mere creation of the envelope of the tooth spaces on a workpiece.

In addition, a gear cutting machine has been developed that does not require a timing procedure between the different machining operations carried out on the above-mentioned workpiece.

The invention thus conceived allows for numerous modifications and variants, all falling within the scope of the attached claims, moreover, all the details can be replaced by other technically equivalent elements.

In practice, the components and materials used, as well as the contingent dimensions and shapes, can be any according to the needs and the state of the art, as long as they are compatible with the specific use.

In the case where the characteristics and techniques mentioned in any of the claims are followed by reference signs, said reference signs are to be intended as affixed for the sole purpose of increasing the intelligibility of the claims and, consequently, said reference signs have no limiting effect on the interpretation of each element identified by way of example by said reference signs.

## Claims

1. Gear cutting machine (10), comprising:
- first supporting means (11) positioned opposite each other, said first supporting means (11) extending along a first axis (J);
- a first shaft (12) whose ends are constrained to said first supporting means (11) along said first axis (J), said first shaft (12) being configured to support a workpiece (G) along said first axis (J);
- first rotation means (13) configured to rotate said first supporting means (11) around said first axis (J);
- second supporting means (15) positioned opposite each other, said second supporting means (15) extending along a second axis (K), said second axis (K) being orthogonal to said first axis (J);
- a hob tool (14) operatively connected to said second supporting means (15) along said second axis (K);
- second rotation means (17) configured to rotate said second supporting means (15) around said second axis (K);
- third rotation means (MA) configured to rotate said second supporting means (15) around a third axis (A), said third axis (A) being orthogonal to said first axis (J) and to said second axis (K);
- first translation means (MX) configured to translate said second supporting means (15) along a fourth axis (X), said fourth axis (X) being parallel to said third axis (A);
- second translation means (MY) configured to translate said second supporting means (15) along a fifth axis (Y), said fifth axis (Y) being parallel to said second axis (K);
- third translation means (MZ) configured to translate said second supporting means (15) along a sixth axis (Z), said sixth axis (Z) being parallel to said first axis (J);
**characterized in that** it comprises at least one tool carrier module (20, 120, 220, 320, 420, 520), said at least one tool carrier module (20, 120, 220, 320, 420, 520) being operatively connected to said second supporting means (15) along said second axis (K), said at least one tool carrier module (20, 120, 220, 320, 420, 520) comprising a rotary assembly (21, 221, 421) configured to receive a mechanical power (P) as an input from said second rotation means (17), said at least one tool carrier module (20, 120, 220, 320, 420, 520) comprising at least one output (22a, 22b) configured to support a tool (T), said at least one tool carrier module (20, 120, 220, 320, 420, 520) comprising transmission means (23, 123) configured to transmit said mechanical power (P) from said rotary assembly (21, 221, 421) to said at least one output (22a, 22b), said at least one tool carrier module (20, 120, 220, 320, 420, 520) comprising a containment body (40) externally fixed to said second translation means (MY), said containment body (40) being configured to support said rotary assembly (21, 221, 421), said at least one output (22a, 22b) and said transmission means (23, 123), said gear cutting machine (10) comprising a second shaft (16, 229, 429) whose ends are constrained to said second supporting means (15) along said second axis (K), said hob tool (14) and said at least one tool carrier module (20, 120, 220, 320, 420, 520) being operatively connected to said second supporting means (15) through said second shaft (16, 229, 429).

2. Gear cutting machine (10) according to claim 1, **characterized in that** said rotary assembly (21) comprises a hollow shaft (29) with said second shaft (16) passing therethrough along said second axis (K), said rotary assembly (21) comprising a gear wheel (30) externally fixed to said hollow shaft (29), said gear wheel (30) being operatively connected to said transmission means (23, 123).

3. Gear cutting machine (10) according to claim 1, **characterized in that** said rotary assembly (221) comprises a gear wheel (230) externally fixed to said second shaft (229), said gear wheel (230) being operatively connected to said transmission means (23, 123).

4. Gear cutting machine (10) according to claim 1, **characterized in that** said second shaft (429) comprises a first portion (429a) and a second portion (429b), said first portion (429a) of said second shaft (429) comprising at its ends a first coupling (425) and a second coupling (426), said second portion (429b) of said second shaft (429) being inserted into said hob tool (14) and comprising at its ends a third coupling (427) and a fourth coupling (428), said rotary assembly (421) comprising a gear wheel (430) externally fixed to said second shaft (429), said gear wheel (430) being operatively connected to said transmission means (23, 123).

5. Gear cutting machine (10) according to any of the preceding claims, **characterized in that** said at least one output (22a, 22b) is configured to rotate around an output axis (I), said output axis (I) being different from said second axis (K).

6. Gear cutting machine (10) according to any of the preceding claims, **characterized in that** said output axis (I) is skew with respect to said second axis (K).

7. Gear cutting machine (10) according to any of the preceding claims, **characterized in that** said at least one tool carrier module (20, 120, 220, 320, 420, 520) comprises a plurality of said at least one output (22a, 22b).

## Patentansprüche

1. Verzahnungsmaschine (10), umfassend:
- erste Stützmittel (11), die einander gegenüber angeordnet sind, wobei sich die besagten ersten Stützmittel (11) entlang einer ersten Achse (J) erstrecken;
- eine erste Welle (12), deren Enden entlang der besagten ersten Achse (J) an den besagten ersten Stützmitteln (11) befestigt sind, wobei die besagte erste Welle (12) dazu konfiguriert ist, ein Werkstück (G) entlang der besagten ersten Achse (J) zu stützen;
- erste Drehmittel (13), die dazu konfiguriert sind, die besagten ersten Stützmittel (11) um die besagte erste Achse (J) zu drehen;
- zweite Stützmittel (15), die einander gegenüber angeordnet sind, wobei sich die besagten zweiten Stützmittel (15) entlang einer zweiten Achse (K) erstrecken, wobei die besagte zweite Achse (K) orthogonal zur besagten ersten Achse (J) ist;
- einen Wälzfräser (14), der mit den besagten zweiten Stützmitteln (15) entlang der besagten zweiten Achse (K) wirkverbunden ist;
- zweite Drehmittel (17), die dazu konfiguriert sind, die besagten zweiten Stützmittel (15) um die besagte zweite Achse (K) zu drehen;
- dritte Drehmittel (MA), die dazu konfiguriert sind, die besagten zweiten Stützmittel (15) um eine dritte Achse (A) zu drehen, wobei die besagte dritte Achse (A) orthogonal zur besagten ersten Achse (J) und zur besagten zweiten Achse (K) ist;
- erste Verschiebemittel (MX), die dazu konfiguriert sind, die besagten zweiten Stützmittel (15) entlang einer vierten Achse (X) zu verschieben, wobei die besagte vierte Achse (X) parallel zur besagten dritten Achse (A) ist;
- zweite Verschiebemittel (MY), die dazu konfiguriert sind, die besagten zweiten Stützmittel (15) entlang einer fünften Achse (Y) zu verschieben, wobei die besagte fünfte Achse (Y) parallel zur besagten zweiten Achse (K) ist;
- dritte Verschiebemittel (MZ), die dazu konfiguriert sind, die besagten zweiten Stützmittel (15) entlang einer sechsten Achse (Z) zu verschieben, wobei die besagte sechste Achse (Z) parallel zur besagten ersten Achse (J) ist;
**dadurch gekennzeichnet, dass** sie mindestens ein Werkzeugträgermodul (20, 120, 220, 320, 420, 520) umfasst, wobei das besagte mindestens eine Werkzeugträgermodul (20, 120, 220, 320, 420, 520) entlang der besagten zweiten Achse (K) mit den besagten zweiten Stützmitteln (15) wirkverbunden ist, wobei das besagte mindestens eine Werkzeugträgermodul (20, 120, 220, 320, 420, 520) eine Drehbaugruppe (21, 221, 421) umfasst, die dazu konfiguriert ist, eine mechanische Leistung (P) als Eingang von den besagten zweiten Drehmitteln (17) zu empfangen, wobei das besagte mindestens eine Werkzeugträgermodul (20, 120, 220, 320, 420, 520) mindestens einen Ausgang (22a, 22b) umfasst, der dazu konfiguriert ist, ein Werkzeug (T) zu stützen, wobei das besagte mindestens eine Werkzeugträgermodul (20, 120, 220, 320, 420, 520) Übertragungsmittel (23, 123) umfasst, die dazu konfiguriert sind, die besagte mechanische Leistung (P) von der besagten Drehbaugruppe (21, 221, 421) zum besagten mindestens einen Ausgang (22a, 22b) zu übertragen, wobei das besagte mindestens eine Werkzeugträgermodul (20, 120, 220, 320, 420, 520) einen Gehäusekörper (40) umfasst, der außen an den besagten zweiten Verschiebemitteln (MY) fixiert ist, wobei der besagte Gehäusekörper (40) dazu konfiguriert ist, die besagte Drehbaugruppe (21, 221, 421), den besagten mindestens einen Ausgang (22a, 22b) und die besagten Übertragungsmittel (23, 123) zu stützen, wobei die besagte Verzahnungsmaschine (10) eine zweite Welle (16, 229, 429) umfasst, deren Enden entlang der besagten zweiten Achse (K) an den besagten zweiten Stützmitteln (15) befestigt sind, wobei der besagte Wälzfräser (14) und das besagte mindestens eine Werkzeugträgermodul (20, 120, 220, 320, 420, 520) über die besagte zweite Welle (16, 229, 429) mit den besagten zweiten Stützmitteln (15) wirkverbunden sind.

2. Verzahnungsmaschine (10) nach Patentanspruch 1, **dadurch gekennzeichnet, dass** die besagte Drehbaugruppe (21) eine Hohlwelle (29) umfasst, durch die die besagte zweite Welle (16) entlang der besagten zweiten Achse (K) verläuft, wobei die besagte Drehbaugruppe (21) ein Zahnrad (30) umfasst, das außen an der besagten Hohlwelle (29) fixiert ist, wobei das besagte Zahnrad (30) mit den besagten Übertragungsmitteln (23, 123) wirkverbunden ist.

3. Verzahnungsmaschine (10) nach Patentanspruch 1, **dadurch gekennzeichnet, dass** die besagte Drehbaugruppe (221) ein Zahnrad (230) umfasst, das außen an der besagten zweiten Welle (229) fixiert ist, wobei das besagte Zahnrad (230) mit den besagten Übertragungsmitteln (23, 123) wirkverbunden ist.

4. Verzahnungsmaschine (10) nach Patentanspruch 1, **dadurch gekennzeichnet, dass** die besagte zweite Welle (429) einen ersten Abschnitt (429a) und einen zweiten Abschnitt (429b) umfasst, wobei der besagte erste Abschnitt (429a) der besagten zweiten Welle (429) an seinen Enden eine erste Kupplung (425) und eine zweite Kupplung (426) umfasst, wobei der besagte zweite Abschnitt (429b) der besagten zweiten Welle (429) in den besagten Wälzfräser (14) eingesetzt ist und an seinen Enden eine dritte Kupplung (427) und eine vierte Kupplung (428) umfasst, wobei die besagte Drehbaugruppe (421) ein Zahnrad (430) umfasst, das außen an der besagten zweiten Welle (429) fixiert ist, wobei das besagte Zahnrad (430) mit den besagten Übertragungsmitteln (23, 123) wirkverbunden ist.

5. Verzahnungsmaschine (10) nach jeglichem der vorhergehenden Patentansprüche, **dadurch gekennzeichnet, dass** der besagte mindestens eine Ausgang (22a, 22b) dazu konfiguriert ist, sich um eine Ausgangsachse (I) zu drehen, wobei sich die besagte Ausgangsachse (I) von der besagten zweiten Achse (K) unterscheidet.

6. Verzahnungsmaschine (10) nach jeglichem der vorhergehenden Patentansprüche, **dadurch gekennzeichnet, dass** die besagte Ausgangsachse (I) in Bezug auf die besagte zweite Achse (K) schräg ist.

7. Verzahnungsmaschine (10) nach jeglichem der vorhergehenden Patentansprüche, **dadurch gekennzeichnet, dass** das besagte mindestens eine Werkzeugträgermodul (20, 120, 220, 320, 420, 520) eine Vielzahl des besagten mindestens einen Ausgangs (22a, 22b) umfasst.

## Revendications

1. Machine à tailler les engrenages (10), comprenant:
- de premiers moyens de support (11) opposés, lesdits premiers moyens de support (11) s'étendant le long d'un premier axe (J);
- un premier arbre (12) dont les extrémités sont bloquées sur lesdits premiers moyens de support (11) le long dudit premier axe (J), ledit premier arbre (12) étant configuré pour supporter une pièce en cours d'usinage (G) le long dudit premier axe (J);
- de premiers moyens de rotation (13) configurés pour faire tourner lesdits premiers moyens de support (11) autour dudit premier axe (J);
- de deuxièmes moyens de support (15) opposés, lesdits deuxièmes moyens de support (15) s'étendant le long d'un deuxième axe (K), ledit deuxième axe (K) étant orthogonal audit premier axe (J);
- un outil de fraisage (14) relié de manière opérationnelle auxdits deuxièmes moyens de support (15) le long dudit deuxièmes axe (K);
- de deuxièmes moyens de rotation (17) configuré pour faire tourner lesdits deuxièmes moyens de support (15) autour dudit deuxième axe (K);
- de troisièmes moyens de rotation (MA) configurés pour faire tourner lesdits deuxièmes moyens de support (15) autour d'un troisième axe (A), ledit troisième axe (A) étant orthogonal audit premier axe (J) et audit deuxième axe (K);
- de premiers moyens de translation (MX) configurés pour translater lesdits deuxièmes moyens de support (15) le long d'un quatrième axe (X), ledit quatrième axe (X) étant parallèle audit troisième axe (A);
- de deuxièmes moyens de translation (MY) configurés pour translater lesdits deuxièmes moyens de support (15) le long d'un cinquième axe (Y), ledit cinquième axe (Y) étant parallèle audit deuxième axe (K);
- de troisièmes moyens de translation (MZ) configurés pour translater lesdits deuxièmes moyens de support (15) le long d'un sixième axe (Z), ledit sixième axe (Z) étant parallèle audit premier axe (J);
**caractérisée en ce qu'**elle comprend au moins un module porte-outil (20, 120, 220, 320, 420, 520), ledit au moins un module porte-outil (20, 120, 220, 320, 420, 520) étant relié de manière opérationnelle auxdits deuxièmes moyens de support (15) le long dudit deuxième axe (K), ledit au moins un module porte-outil (20, 120, 220, 320, 420, 520) comprenant un groupe rotatif (21, 221, 421) configuré pour recevoir une puissance mécanique (P) en entrée desdits deuxièmes moyens de rotation (17), ledit au moins un module porte-outil (20, 120, 220, 320, 420, 520) comprenant au moins une sortie (22a, 22b) configurée pour supporter un outil (T), ledit au moins un module porte-outil (20, 120, 220, 320, 420, 520) comprenant des moyens de transmission (23, 123) configurés pour transmettre ladite puissance mécanique (P) depuis ledit groupe rotatif (21, 221, 421) à ladite au moins une sortie (22a, 22b), ledit au moins un module porte-outil (20, 120, 220, 320, 420, 520) comprenant un corps de confinement (40) fixé extérieurement auxdits deuxièmes moyens de translation (MY), ledit corps de confinement (40) étant configuré pour supporter ledit groupe rotatif (21, 221, 421), ladite au moins une sortie (22a, 22b) et lesdits moyens de transmission (23, 123), ladite machine à tailler les engrenages (10) comprenant un deuxième arbre (16, 229, 429) dont les extrémités sont bloquées sur lesdits deuxièmes moyens de support (15) le long dudit deuxième axe (K), ledit outil de fraisage (14) et ledit au moins un module porte-outil (20, 120, 220, 320, 420, 520) étant reliés de manière opérationnelle auxdits deuxièmes moyens de support (15) par l'intermédiaire dudit deuxième arbre (16, 229, 429).

2. Machine à tailler les engrenages (10) selon la revendication 1, **caractérisée en ce que** ledit groupe rotatif (21) comprend un arbre creux (29) traversé par ledit deuxième arbre (16) le long dudit deuxième axe (K), ledit groupe rotatif (21) comprenant une roue dentée (30) fixée extérieurement audit arbre creux (29), ladite roue dentée (30) étant reliée de manière opérationnelle auxdits moyens de transmission (23, 123).

3. Machine à tailler les engrenages (10) selon la revendication 1, **caractérisée en ce que** ledit groupe rotatif (221) comprend une roue dentée (230) fixée extérieurement audit deuxième arbre (229), ladite roue dentée (230) étant reliée de manière opérationnelle auxdits moyens de transmission (23, 123).

4. Machine à tailler les engrenages (10) selon la revendication 1, **caractérisée en ce que** ledit deuxième arbre (429) comprend une première partie (429a) et une deuxième partie (429b), ladite première partie (429a) dudit deuxième arbre (429) comprenant à ses extrémités un premier accouplement (425) et un deuxième accouplement (426), ladite deuxième partie (429b) dudit deuxième arbre (429) étant insérée dans ledit outil de fraisage (14) et comprenant à ses extrémités un troisième accouplement (427) et un quatrième accouplement (428), ledit groupe rotatif (421) comprenant une roue dentée (430) fixée extérieurement audit deuxième arbre (429), ladite roue dentée (430) étant reliée de manière opérationnelle auxdits moyens de transmission (23, 123).

5. Machine à tailler les engrenages (10) selon l'une quelconque des revendications précédentes, **caractérisée en ce que** ladite au moins une sortie (22a, 22b) est configurée pour tourner autour d'un axe de sortie (I), ledit axe de sortie (I) étant différent dudit deuxième axe (K).

6. Machine à tailler les engrenages (10) selon l'une quelconque des revendications précédentes, **caractérisée en ce que** ledit axe de sortie (I) est oblique par rapport audit deuxième axe (K).

7. Machine à tailler les engrenages (10) selon l'une quelconque des revendications précédentes, **caractérisée en ce que** ledit au moins un module porte-outil (20, 120, 220, 320, 420, 520) comprend une pluralité de ladite au moins une sortie (22a, 22b).
